# EUROPEAN PATENT SPECIFICATION

(11) **EP 1 454 537 B1**
(45) Date of publication and mention of the grant of the patent: **13.09.2006**
(21) Application number: 02738193.8
(22) Date of filing: 12.06.2002
(51) Int. Cl.: A23K 1/18, A23K 1/16

(54) **ANIMAL FEED FORMULATION WHICH IS USED TO CONTROL THE FATTY ACID PROFILE IN PIG MEAT**
TIERFUTTERFORMULIERUNG FÜR DIE STEUERUNG DES FETTSÄUREPROFILS IN SCHWEINEFLEISCH
FORMULATION D'UN ALIMENT POUR ANIMAUX PERMETTANT DE CONTROLER LE PROFIL D'ACIDES GRAS DE LA VIANDE PORCINE

(30) Priority: 14.11.2001 ES 200102511
(43) Date of publication of application: 08.09.2004
(73) Proprietor: Alvaher 98, S.L., 28017 Madrid (ES); CONSEJO SUPERIOR DE INVESTIGACIONES CIENTIFICAS, E-28006 Madrid (ES)
(72) Inventor: VAQUERO HERNANDEZ, Alberto, E-28017 Madrid (ES); TOLDRA VILARDELL, Fidel, E-28006 Madrid (ES); NAVARRO FABRA, José Luis, E-28006 Madrid (ES)
(74) Representative: Temino Ceniceros, Ignacio
(86) International application number: PCT/ES2002/000290
(87) International publication number: WO 2003/041511

(56) References cited:
- FR-A- 2 149 513
- GB-A- 2 296 852
- BROOKS C.C.: 'Fatty acid composition of pork lipids as affected by basal diet, fat source and fat level' J. ANIMAL SCI. vol. 33, no. 6, 1971, pages 1224 - 1231, XP002968203
- LESZCYNSKI D.E. ET AL: 'Characterization of lipid in loin and bacon from finishing pigs fed full-fat soybeans or tallow' J. ANIMAL SCI. vol. 70, 1992, pages 2175 - 2181, XP002966077
- LARICK D.K. ET AL: 'Volatile compound content and fatty acid compostion of pork as influenced by linoleic acid content of the diet' J. ANIMAL SCI. vol. 70, 1992, pages 1397 - 1403, XP002966078
- RHEE K.S. ET AL: 'Effect of dietary high-oleic sunflower oil on pork carcass traits and fatty acid profiles of raw tissues' MEAT SCIENCE vol. 24, 1988, pages 249 - 260, XP002968204

## Description

### OBJECT OF THE INVENTION

This invention refers to a new formulation for pig feed, a formulation specially designed to control the profile of the fatty acids that participate in pork from pigs given this feed.

Thus, the object of the invention is to control the fatty acid composition of pork lipids, through the formulation of a feed that is given to pigs in the last few weeks/months before they are slaughtered.

This formulation means an improvement in the lipid profile, which is primarily reflected in a substantial increase in the percentage of polyunsaturated fatty acids in the total amount of fat. In addition, the amount of intramuscular fat is maintained at low levels, ranging between 2 and 3 percent.

Thus, the main advantage of the formulation proposed by the invention, with regard to fatty acids in the lipid fraction, consists of a larger proportion of polyunsaturated fatty acids compared to saturated ones.

Given the fact that, according to medical studies, a high ratio of polyunsaturated / saturated fatty acids gives the organism greater protection with respect to LDL cholesterol, and in general from cardiovascular disease, the invention is particularly applicable in the pork industry, because of the high levels of pork consumption in the Western world and the influence of the fatty acid composition of lipids in that type of meat, especially with regard to the cardiovascular health of the consumers.

### BACKGROUND OF THE INVENTION

The continuous scientific and technological advances achieved in the food and agriculture industry have been offset by a significant decrease in the quality of the food that is produced, due to early maturity in livestock production, the type of feeds used for animal growth and fattening, as well as the generalized search for increasingly faster industrial manufacturing processes. All of these factors have had an impact on causing a certain deterioration in quality, as well as a gradual loss of consumer confidence, especially with regard to the fat in meat and its impact on health. It is a well-known fact that consumers have become sensitized to cardiovascular disease and the evidence that connects it to nutrition, and to the fat in meat. Thus, it is essential to achieve and maintain a better level of quality and of lipid composition, one that is not only appealing to consumers but also beneficial to their health. For this reason, improvement in the formulation of animal feed, such as the one described herein which is the object of this patent, is considered to be of the utmost interest, in order to improve the lipid profile, i.e., the proportion of polyunsaturated fatty acids to other fatty acids.

There are two major groups of lipids in meat:
1) Neutral lipids, made up mostly of triglycerides, localized in subcutaneous fat both in the dorsal adipose tissue and in fat infiltrating the muscle, and
2) Polar lipids, mainly phospholipids located in the muscular (or lean) part of the meat. Both groups of lipids are esterified with different saturated, monounsaturated and polyunsaturated fatty acids. Composition in these fatty acids depends both on endogenous synthesis and on direct deposition. It is precisely through this latter route that certain fatty acids can be accumulated in animal fat through diet (*Brooks, "Fatty acid composition of pork lipids as affected by basal diet, fat source and fat level, " J. Animal Science 33, 1971, 1224-1231*). Different studies have been made about the feeding of pigs and the later checking of the fatty acid profile to verify alterations in fatty acid composition. In all of these studies, different formulations have been used whose main components are soybean meals (*Lesczynski, Pikul, Easter, McKeith, McLaren, Novakofski, Bechtel and Jewell, "Characterization of lipid in loin and bacon from finishing pigs fed full-fat soybeans or tallow, " J. Animal Science 70, 1992, 2175-2181*), or a mixture with corn (*Larick, Turner, Sochoenherr, Coffey and Pilkington, "Volatile compound content and fatty acid composition of pork as influenced by linoleic acid content of the diet, " J. Animal Science 70, 1992, 1397-1403*), high-oleic sunflower oil (*Rhee, Davidson, Knabe, Cross, Ziprin and Rhee, "Effect of dietary high-oleic sunflower oil on pork carcass traits and fatty acid profiles of raw tissues, " Meat Science 24, 1988, 249-260; Miller, Shackelford, Hyden and Reagan, "Determination of the alteration in fatty acid profiles, sensory characteristics and carcass traits of swine fed elevated levels of monounsaturated fats in the diet, " J. Animal Science 68, 1990, 1624-1631*) or canola (*Busboom, Rule, Colin, Heald and Mazhar, "Growth, carcass characteristics and lipid composition of adipose tissue and muscle of pigs fed canola, " J. Animal Science 69, 1991, 1101-1108*). Work has also been done to incorporate antioxidants such as vitamin E and thus prevent fat oxidation (*Hoving-Bolink, Eikelenboom, van Diepen, Jongbloed and Houben, "Effect of vitamin E supplementation on pork quality, " Meat Science 49, 1998, 205-212; Pfalzgraf, Frigg and Steinhart, "α-tocopherol contents and lipid oxidation in pork muscle and adipose tissue during storage, " J. Agricultural and Food Chemistry 43, 1995, 1339-1342; Houben, Eikelenboom and Hoving-Bolink, "Effect of dietary supplementation with vitamin E on color stability and lipid oxidation in packaged, minced pork, " Meat Science 48, 1998, 265-273; Zanardi, Novelli, Nanni, Ghiretti, Delbono, Dazzi, Madarena and Chizzolini, "Oxidative stability and dietary treatment with vitamin E, oleic acid and copper of fresh and cooked pork chops, " Meat Science 49, 1998, 309-320*).

### DESCRIPTION OF THE INVENTION

The formulation proposed by the invention as defined in the claim constitutes a significant technological advance in this field in order to substantially improve the fatty acid profile, in other words, in order to improve the polyunsaturated/saturated fatty acid ratio, in parallel with the additional incorporation of vitamin E to protect the increase of polyunsaturated fatty acids, maintaining their integrity against oxidative processes.

Barley, corn, white wheat, soybean meal, sweet lupin, calcium carbonate, dicalcium phosphate, sodium chloride, DL-methionine, L-lysine, soy oil, 2F Porcimix for breeding pigs, and α-tocopherol acetate especially participate in the new formulation as components.

The aforementioned components participate in the formula in the following percentages:
- Barley 45-55%
- Corn 12-18%
- White wheat 3-8%
- 44% soybean meal 10-18%
- Sweet lupin 8-12%
- Calcium carbonate 0.3%
- Dicalcium phosphate 2.02%
- Sodium chloride 0.3%
- DL-methionine 0.077%
- L-lysine 0.368%
- Soy oil 2.4%
- 2F Porcimix for breeding pigs 0.4%
- α-tocopherol (vitamin E) 100-300 mg./kg.

By using a feed with the formulation described above, and feeding the pigs for a period of up to four months prior to slaughter, the results obtained can be monitored by extracting, through physical means, any piece of meat or subcutaneous fat, and later quantifying the fatty acids through gas chromatography.

### PREFERRED EMBODIMENT OF THE INVENTION

Trials have been run based on the formulation in the invention, one of which corresponds to the following example:

Starting with a litter of Large White x Landrace piglets, this litter was given a feed with the following formulation:
- 45% barley
- 17% corn
- 8% wheat
- 15% soybean meal
- 8% lupin
- 2.5 % soy oil
- 1.8% dicalcium phosphate
- 0.25% calcium carbonate
- 0.3% salt
- 0.05% L-methionine
- 0.27% L-lysine
- 0.4% Porcimix

The pigs were fed this fattening feed until they reached a live weight of 100 kg.

Once they were slaughtered, the meat was cut (24 hours post-mortem) and a sample was taken from the longissimus dorsi muscle for the analysis of intramuscular fat, and the adjacent subcutaneous tissue (visible fat).

Once both tissues were ground, and the fat was extracted, an analysis of the fatty acids was made using gas chromatography with a flame ionization detector.

The results, expressed as a percentage of the total amount of fatty acids, are shown in the table below.

| **Fatty Acid (%)** | **Intramuscular Fat** | **Subcut. Tissue Fat** |
|---|---|---|
| 14:0 | 1.8 | 1.4 |
| 16:0 | 25.7 | 23.8 |
| 18:0 | 11.4 | 11.7 |
| **Saturates (S)** | **38.9** | **36.9** |
| 16:1 | 3.2 | 1.7 |
| 18:1 | 36.8 | 31.6 |
| 20:1 | 0.45 | 0.45 |
| **Monounsaturates (M)** | **40.45** | **33.75** |
| 18:2 | 16.6 | 25.4 |
| 18;3 | 1.07 | 2.64 |
| 20:2 | 0.45 | 0.78 |
| 20:3 | 0.31 | 0.10 |
| 20:4 | 1.83 | 0.19 |
| 20:5 | 0.20 | 0.02 |
| 22:4 | 0.19 | 0.07 |
| 22:6 | 0.18 | 0.03 |
| **Polyunsaturates (P)** | **20.83** | **29.22** |
| **M/S Ratio** | **1.04** | **0.91** |
| **P/S Ratio** | **0.54** | **0.79** |

## Claims

1. Feed formulation to control the fatty acid profile in pork, **characterized in that** the aforementioned components participate in the formulation in the following proportions:
- Barley 45-55%
- Corn 12-18%
- White wheat 3-8%
- 44% soybean meal 10-18%
- Sweet lupin 8-12%
- Calcium carbonate 0.3%
- Dicalcium phosphate 2.02%
- Sodium chloride 0.3%
- DL-methionine 0.077%
- L-lysine 0.368%
- Soy oil 2.4%
- 2F Porcimix for breeding pigs 0.4%
- α-tocopherol (vitamin E) 100-300 mg./kg.
so that the pork meat obtained has a polyunsaturated fatty acid composition greater than 20% of the total fatty acids.

## Patentansprüche

1. Eine Futterrezeptur, die den Fettsäuregehalt im Schwein unter Kontrolle hält und sich **dadurch** charakterisiert, dass die vorher genannten Bestandteile in der Rezeptur wie folgt anteilsmäßig enthalten sind:
- Gerste 45-55 %
- Getreide 12-18 %
- Weißer Weizen 3-8 %
- 44 % Sojabohnenmehl 10-18 %
- Süße Lupinen 8-12 %
- Kalziumkarbonat 0,3 %
- Dikalziumphosphat 2,02 %
- Natriumchlorid 0,3%
- DL-Methionine 0,077 %
- L-Lysine 0,368 %
- Sojaöl 2,4 %
- 2F Porcimix für Zuchtschweine 0,4 %
- Alpha-Tocopherol (Vitamin E) 100-300 mg/kg
sodass der Gehalt der mehrfach ungesättigten Fettsäuren des gewonnenen
Schweinefleisches höher als 20 % des Gesamtgehaltes der Fettsäuren ist.

## Revendications

1. Formulation d'un aliment pour le test de profil des acides gras dans le porc, **caractérisée par le fait que** les ingrédients susmentionnés participent à la formulation dans les proportions suivantes :
- Orge 45-55%
- Maïs 12-18%
- Blé blanc 3-8%
- 44% farine de soja 10-18%
- Lupin doux 8-12%
- Carbonate de calcium 0.3%
- Phosphate bicalcique 2,02%
- Chlorure de sodium 0,3%
- DL-Méthionine 0,077%
- L-lysine 0,368%
- Huile de soja 2,4%
- Porcimix 2F pour porcs d'élevage 0,4%
- a-tocophérol (vitamine E) 100-300 mg/kg
de sorte que la viande de porc obtenue présente une composition en acides gras polyinsaturés supérieure à 20% du total des acides gras.
